# EUROPEAN PATENT SPECIFICATION

(11) **EP 1 981 360 B1**
(45) Date of publication and mention of the grant of the patent: **24.02.2010**
(21) Application number: 07715867.3
(22) Date of filing: 07.02.2007
(51) Int. Cl.: A23L 1/29, A23L 1/30, A23L 1/212

(54) **SENSORIC IMPRINTING**
SENSORISCHES EINPRÄGEN
IMPRÉGNATION SENSORIELLE

(30) Priority: 07.02.2006 EP 06101381
(43) Date of publication of application: 22.10.2008
(73) Proprietor: N.V. Nutricia, 2712 HM Zoetermeer (NL)
(72) Inventor: ALLES, Martine, Sandra, NL-7328 NH Apeldoorn (NL)
(74) Representative: Swinkels, Bart Willem
(86) International application number: PCT/NL2007/050047
(87) International publication number: WO 2007/091886

(56) References cited:
- DE-A1- 3 737 442
- US-A- 6 051 235
- US-A1- 2003 180 393
- DATABASE WPI Section Ch, Week 200345 Derwent Publications Ltd., London, GB; Class D13, AN 2003-478589 XP002374729 & RU 2 204 916 C1 (UNIV KUBAN TECHN) 27 May 2003 (2003-05-27)
- DATABASE WPI Section Ch, Week 200258 Derwent Publications Ltd., London, GB; Class D13, AN 2002-539186 XP002374730 & CN 1 184 614 A (HU J) 17 June 1998 (1998-06-17)

## Description

### FIELD OF THE INVENTION

The present invention is in the field of good health and concerns stimulating the consumption of plant material such as vegetables and fruit. In particular a kit of parts is provided with food products that are suitable for administration to an infant that serves the purpose of stimulating the consumption of e.g. vegetables and fruit later in life.

### BACKGROUND OF THE INVENTION

The ingestion of fruits and vegetables is very important for humans to maintain good health. Authorities and health organizations have repeatedly pointed to the importance of ingesting sufficient fruits and vegetables in an attempt to prevent diseases such as obesity, cancer and cardiovascular diseases from occurring. Despite all the effort, fruit and vegetable consumption is not increasing and diseases like obesity and diabetes are taking epidemic forms.

US2005/0095324 discloses a ready-to-eat pre-packaged food for feeding infants or babies, in the form of a multi-component meal of a pasty or congealable consistency. This meal includes at least two components that can be visually differentiated, are unmixed and occupy at least two different volume segments of a product container or shape, and delimiting boundaries between the at least two components in the form of essentially vertical interfaces that are visible from above the container or shape as contours or boundary lines. The food aims to allow the individual constituents of the meal to be combined in a novel fashion, thus making it possible during the feeding process to better recognize taste-related preferences and at the same time to make that process a visually interesting event for the infant or baby being fed.

It is an object of the present invention to provide means and methods that contribute to good health of subjects. In particular it is an object to provide means and methods that result in a reduced chance to develop diseases such as obesity and diabetes. More in particular the present invention aims to stimulate the consumption of vegetables and fruit, thereby resulting in a reduced chance to develop diseases such as obesity and diabetes.

### SUMMARY OF THE INVENTION

Subject of the present invention is that when infants are exposed to discrete amounts of plant materials of different tastes, the acquirement of a dislike of taste for different plant materials can be avoided. In fact the acceptance or liking of the taste of different plant materials and/or the consumption of different plant materials later in life can be stimulated or improved when infants are exposed to discrete amounts of plant materials of different tastes. The exposure, e.g. administering or feeding, of infants to different plant materials, particularly from vegetable or fruit, results in the sensoric imprinting of the different tastes. Children and adults having been subjected to this process of sensoric imprinting when they were young, ingest more fruits and vegetables, resulting in an improved health. Due to the healthier lifestyle, "junk food" related diseases such as obesity and diabetes are prevented. Furthermore, the present method results in an increased intake of fibers and/or iron, while keeping caloric intake relatively low. Insufficient intake of iron and fiber is a problem for many infants.

Infants are preferably subjected to the sensoric imprinting described above as early as possible, preferably before the infant reaches the age of 2, as the effect is than believed to be optimal. This results in some restrictions concerning the characteristics of the plant material to be administered, i.e. these should be in a form suitable for administration to the infant. The present food compositions are therefore preferably a plant puree or juice, which is suitable for ingestion by infants or an infant formula which has been fortified with plant material.

When provided as puree type foodstuff it is preferred that the volume to be administered to the infant is relatively small, as the exposure to different tastes preferably has a limited interference with the normal feeding pattern and ingestion of large volumes may result in adverse effects such as development of dislike for the taste. Also, in order to establish a sufficient sensoric imprinting effect discrete amounts of different plant materials of different tastes are preferably administered.

The acceptance or liking of the taste of different plant materials and/or the consumption of different plant materials later in life can also be stimulated or improved when infants are exposed to different tastes of plant materials in combination with the intake of infant formula, in particular dry infant formula. A variety of discrete portions of powdered infant nutrition comprising different plant materials can be used. Preferably the only difference between the infant formulas in the present invention is the plant material, while the other nutritional ingredients remain the same. Such a dry infant formula can be bottle fed to the infant after admixing with an aqueous liquid. The different plant materials in these nutritional compositions stimulate the sensoric imprinting.

Thus the present invention provides the means for sensoric imprinting resulting and contributing to good health of a subject in the form of a kit of parts as defined in claim 7. Also a method for sensoric imprinting is provided, as defined in claim 1.

### DETAILED DESCRIPTION OF THE PREFFERED EMBODIMENT

### Kit of parts

The present invention provides a "kit of parts" comprising a plurality of containers. The container is preferably in the form of a can, cup, jar, sachet or the like. Each container preferably comprises one portion of food product. The containers typically have a capacity of between 2 and 100 ml, or between 2 and 100 g, preferably a capacity of 2 to 50 ml, or 2 to 50 g. The containers are preferably constructed so to ensure hygienic protection against contamination and spoilage, e.g. dust, dirt and bacteria. The containers are suitably made from plastic, paper and/or aluminium, preferably in the form of a cup, with a sealed lid, wherein said lid can preferably be peeled-off. The containers are preferably provided as a kit of parts by being enclosed in a single packaging (e.g. carton, box, net or foil) and/or (mutually) interconnected by means of connecting portion(s) which are preferably breakable. The lids are preferably removable from each container individually, preferably by tearing. In one preferred embodiment, the kit of parts is a box with at least 7 sachets, wherein each sachet contains a portion food product.

The kit preferably comprises 4 to 50 containers, more preferably 4 to 25 containers. The kit preferably comprises at least 2 containers with one portion food product, preferably at least 4 containers with one portion food product, more preferably at least 8 containers with one portion food product.

A (one) portion is one of (i), (ii) or (iii), wherein:
(i) 2 to 50 ml in liquid or semi-liquid, preferably 2-50 ml puree.
(ii) 2 to 50 gram dry infant nutrition, preferably powdered infant formula.
(iii) 150 to 250 ml liquid infant nutrition.

The present kit comprises a container with one portion food product A (FP-A), a container with one portion food product B (FP-B), a container with one portion food product C (FP-C) and a container with one portion food product D (FP-D), more preferably also a container with one portion food product E (FP-E). FP-A, FP-B, FP-C, FP-D and FP-E are typically in separate containers. FP-A, FP-B, FP-C, FP-D and FP-E have different tastes, in particular each of FP-A, FP-B, FP-C, FP-D and FP-E comprises a plant material from a plant species other than the plant species that is used for the manufacture of each of the other food products. Optionally the kit of parts comprises a further food product F and optionally a further food product G and optionally a further food product H and optionally a further food product I and optionally a further food product J and optionally a further food product K. Also food products F, G, H, I and J have different tastes, in particular each of food products F, G, H, I and J comprises a plant material from a plant species other than the plant species that is used for the manufacture of each other of the food products A, B, C, D, E, F, G, H, I and J. In fact for the purpose of this invention there is no limit to the maximum number of different food products in the kit of parts according to the invention. The kit of parts according to the invention comprises not more than 100 containers. The kit of parts comprises 4-100, e.g. 4, 5, 6, 7, 8, 9, 10, 11, 12, 13, 14, 15, 16, 17, 18, 19, 20....98, 99, 100, different food products of different taste, in particular different food products comprise a plant material from a plant species other than the plant species that is used for the manufacture of each other different food product.

### Food product: Puree type

The present method comprises the administration of a plurality of food products, preferably to infants with the age below 4 years, more preferably below 2 year, most preferably below 1 year. The present food products are therefore suitable for administration to infants. In one embodiment the food product is preferably a juice, puree or gel. Preferably the food product is a gel or puree as the oral administration normally of such product involves some mastication, enabling better and improved contact with taste receptors. Most preferably the present food product is a plant puree. The plant puree may contain chucks. Purees with chucks are normally suitable for administration to infants having an age between 1 and 4 years. Preferably the present food compositions are purees without chunks, preferably homogeneous mixtures.

The food product used in the present invention is preferably a semisolid composition which suitably can be administered to an infant having an age below 2 years, preferably a puree. The puree is preferably obtained at least partly from vegetables, e.g. by mincing a vegetable. The puree suitably comprises a (concentrated) vegetable material admixed with a liquid such as with juice or water. Preferably at least one of the present food compositions comprises a mixture of apple juice and vegetable plant puree. The puree may comprise additives such as thickeners, vitamins, minerals, conservation aid and the like. Preferably at least one food composition, more preferably at least 2 food compositions contain an ingredient selected from the group consisting of prebiotic oligosaccharides, probiotic bacteria, docosahexaenoic acid and eicosapentaenoic acid.

The present (puree-type) food product preferably has a viscosity between 100 and 100.000 mPas at a shear rate of 50 per second and 20°C, preferably between 500 and 10.000 mPas at a shear rate of 50 per second and 20°C.

To ensure a good sensoric imprinting, the taste of the food product preferably resembles the taste of a vegetable plant product. Hence, the food product comprises at least 50 wt.% plant derived material based on total weight, preferably at least 75 wt.%, more preferably at least 95 wt.%, and most preferably at least 99 wt.%. The food product comprises at least 50 wt.% plant material from a single plant based on dry weight of the food product, preferably at least 75 wt.%, even more preferably at least 90 wt.%. The plant material is preferably selected from the vegetables, or fruits mentioned below.

Preferably mixtures of significant amounts of different plant purees are not used in one portion as the taste imprinting effect is than reduced. Preferably at least 75 wt.% based on total weight of the plant material in FP-A (and optionally also FP-B) is provided by 1. plant species, 2 different plant species or 3 different plant species, preferably 1 or 2 plant species. More preferably at least 95 wt.% based on total weight of the plant material in FP-A (and optionally also FP-B) is provided by 1 plant species, 2 different plant species or 3 different plant species, preferably 1 or 2 plant species. The food products preferably contain 1 fruit and/or 1 vegetable plant material. For improvement of palatability, in one embodiment the present FP-A and/or FP-B and optionally also FP-C and/or FP-D etc. comprises fruit juice and vegetable puree.

To further improve the imprinting effects, each puree preferably has a "single " taste; and therefore is preferably for the majority obtained from a single plant source, e.g. carrot or pea. Minor amounts of additives, juices, purees and other component are usually not problematic. Using pure tastes improves the imprinting effects. Hence, the food product comprises at least 50 wt.% plant material derived from a single plant based on the total weight of plant material, preferably at least wt. 75%, even more preferably at least 90 wt.%. The food product comprises at least 50 wt.% plant material derived from a single plant based on the total dry weight of plant material, preferably at least wt. 75%, even more preferably at least 90 wt.%.

To keep the taste as close as possible to the taste of the plant material mainly present in the natural food, the present food products preferably comprise only limited amounts of taste influencing components such as meat and fish. Hence preferably the present food compositions contains 0 - 10 wt.% ingredients from animal origin based on total wet weight of the present food composition; preferably 0-10 wt.% meat and/or fish in based on total wet weight of the present food composition. Preferably the present composition contains less than 8 wt.% meat and/or less than 8 wt.% fish based on total wet weight of the food composition. Most preferably FP-A, FP-B, FP-C and/or FP-D etc. do not contain meat or fish.

Preferably the present FP-A, and preferably also FP-B, FP-C and/or FP-D etc. comprise less than 10 wt.% fat per 100 gram food product, preferably less than 5 wt.%, even more preferably less than 2 wt.%. Similarly, taste influencing high protein components such as milk and meat are preferably not present in the present food products. Hence preferably the present FP-A, and preferably also FP-B, FP-C and/or FP-D etc. comprise less than 20 wt.% protein per 100 gram food product, preferably less than 15 wt.%, even more preferably less than 10 wt.%.

The present method preferably has a limited influence on the normal eating pattern of the infant. The caloric density of the present food products is preferably low. The food products, particularly FP-A, and preferably also FP-B, FP-C and/or FP-D etc., preferably have a caloric density below 60 kcal per 100 gram food product, more preferably below 50 kcal/100 gram food product, even more preferably below 40 kcal per 100 gram food product. The caloric density is preferably at least 5 kcal/100 g food product.

### Food product: infant nutrition-type

In a further preferred embodiment the present invention relates to the administration of infant formula with plant material admixed to the infant formula. In this way no separate feeding has to take place, while ensuring exposure to multiple plant material tastes. The containers of the present kit advantageously comprise a portion of food product, wherein the portion is 2 to 50 gram dry infant nutrition or 150 to 250 ml liquid infant nutrition. The dry infant nutrition is preferably selected from the group consisting of a powdered infant formula, powdered cereal, infant formula in tablet form and a powdered plant material suitable for admixing to infant formula; most preferably a powdered infant formula is used. An embodiment where concentrated infant formula is used, which is subsequently diluted to liquid infant formula with a volume of 150 to 250 ml is also within the scope of this invention.

Preferably the kit of parts contains at least 7 containers with one portion infant formula, preferably at least 10 containers with one portion infant formula, more preferably at least 15 containers with one portion infant formula.

When the food products in the kit are infant formula, infant cereal or infant formula in tablet form, the difference between the different food compositions is preferably the plant material(s) used for the sensoric imprinting effect. Preferably the present kit contains different infant formula. Hence preferably FP-A and FP-B, and also preferably FP-C, FP-D, FP-E and FP-F are infant nutrition which can provide complete nutrition to the infant. Preferably the present food products are infant formula to which different plant materials are admixed. The present food compositions (infant formula) preferably comprise between 5 and 60 en% lipid, between 5 and 40 en% protein and between 15 and 90 en% carbohydrate, more preferably between 10 and 60 en% lipid, between 5 and 40 en% protein and between 25 and 75 en% carbohydrate. (en% is short for energy percentage and represents the relative amount each constituent contributes to the total caloric value of the preparation). When administered to the infant the food composition preferably has an osmolality between 50 and 500 mOsm/kg, more preferably between 100 and 400 mOsm/kg. The caloric density is preferably between 0.1 and 2.5 kcal/ml, even more preferably a caloric density of between 0.5 and 1.5 kcal/ml, most preferably between 0.6 and 0.8 kcal/ml. The viscosity is preferably between 1 and 25 mPas at a shear rate of 100 per second and 20°C.

### Method

The present sensoric imprinting method can be realized in different ways, e.g. by administration of food compositions in the form of puree or as an infant formula. The following compositions are preferably administered to the infant, and hereinafter referred to as "serving":
(I) 2 to 50 ml food composition; or
(II) 150 to 250 ml infant nutrition, preferably infant formula.

The present method relates to the administration of at least one serving FP-A and at least one serving FP-B, at least one serving FP-C and at least one serving FP-D. The method relates to the sequential administration of FP-A and FP-B, followed by the administration of FP-C, and followed by administration of FP-D.

The present invention is particularly suitable for sensoric imprinting of different tastes. The present invention also provides a method for stimulating an increased consumption of healthy plant material such as vegetables and fruit later in life. The present invention also provides a method for increasing familiarization with multiple plant tastes. The present method particularly aims to reduce the occurrence of diseases later in life. Hence, the present invention also provides a method for the prevention and/or treatment of obesity, diabetes, atherosclerosis, hypertension, cardiovascular diseases, high blood pressure, cancer, iron deficiency anemia and constipation, particularly the prevention of the abovementioned diseases.

The present method comprising the steps of: step a: administering to the infant one serving FP-A; followed by step b: administering to the infant one serving FP-B; wherein FP-A comprises a plant material and FP-B comprises a plant material from a plant species other than the plant species used for the manufacture of FP-A. Step b. is followed by step c: administering to the infant one serving food product C (FP-C), wherein FP-C comprises a plant material from a plant species other than the plant species used for the manufacture of FP-A and other than a plant species used for the manufacture of FP-B. The present method also comprises a step d: administering to the infant one serving food product D (FP-D), wherein FP-D comprises a plant material from a plant species other than the plant species used for the manufacture of FP-A, other than a plant species used for the manufacture of FP-B and other than a plant species used for the manufacture of FP-C. Optionally the present method further comprises administering to the infant one serving of a food product E (FP-E) and optionally a further food product F and optionally a further food product G and optionally a further food product H and optionally a further food product I and optionally a further food product J and optionally one or more even further food products wherein each of food products E, F, G, H, I and J one or more further food products comprise a plant material from a plant species other than the plant species that is used for the manufacture of each other of the food products A, B, C, D, E, F, G, H, I and J and one or more even further food products. Thus for example the present method encompasses the administration of the present food product in the following order, A - A - B - B - C - C - D - D.

Repeated exposure such as more than one exposure during the day enhances the sensoric imprinting effect. Hence, in the present method, the infant preferably is administered 1, 2 or 3 of the present food compositions per day. These may be food compositions with different or the same composition. In one embodiment at least two different food compositions are administered to the infant per day, or alternatively at least three.

For optimal sensoric imprinting, the present FP-A and FP-B, are preferably administered with an interval of between 1 and 24 hours, optionally with an interval between 1 and 14 hours, yet in another option with an interval between 1 to 8 hours. Preferably the variety of tastes offered to the infant is relatively high. Hence, preferably at most 5 identical food products are administered sequentially, preferably at most 2. Preferably FP-B is administered to the infant within 24 hours after administration of FP-A, optionally within 12 hours. Alternatively FP-B is administered to the infant at least 1 hour after administration of FP-A, preferably at least 3 hours.

The present method comprises the administration of at least 4 different food products, more preferably at least 5, 6, 7, 8, 9, 10, 11, 12 etc. and preferably at most 20. In the present method, preferably between 4 and 100, more preferably between 4 and 25 food products are administered to the infant.

The present method and kit of parts can also be used in a method for the detection of allergies against fruits and vegetables. For this embodiment it may be beneficial to have a kit of parts that comprises at least 2 containers with food product A, preferably at least 3 or alternatively at least 4 containers with food product A. Optionally the kit of parts also comprises at least 2 containers with food product B, preferably at least 3 or alternatively at least 4 containers with food product B. In further embodiments 2, 3 or 4 containers comprising food product C and/or 2, 3 or 4 containers comprising food product D etc mey be comprised in the kit of parts. It may be advantageous to vary the amounts of food products A and B and optionally further food products C and/or D etc. in the containers , e.g one container with 5 or 10 ml, a second with 10 or 20 ml a third with 15 or 30 ml and a fourth with 20 or 40 ml comprising the same food product. In the method of exposing an infant to a food product it is preferred to administer the same food product on sequential days, preferably in an increasing amount of the food product.

The present method is preferably used by infant having an age below 2 years, preferably between 3 and 18 months, even more preferably between 4 and 10 months. The food products are therefore preferably suitable for administration to an infant having an age between 4 and 10 months.

### Different food products

The present invention provides the administration of a plurality of food products and a kit comprising a plurality of food products. Food product A (FP-A) comprises a plant material. Food product B (FP-B) comprises a plant material from a plant species other than the plant species used for the manufacture of FP-A, e.g. FP-A comprises pea puree and FP-B comprises carrot puree. Food product C (FP-C) comprises a plant material from a plant species other than the plant species used for the manufacture of FP-A and other than a plant species used for the manufacture of FP-B. Food product D (FP-D) comprises a plant material from a plant species other than the plant species used for the manufacture of FP-A, other than a plant species used for the manufacture of FP-B and other than a plant species used for the manufacture of FP-C. In further embodiments one or more further food products are comprised in the kit of parts, said one or more further food products comprising a plant material from a plant species other than the plant species used for the manufacture of the other food products. Thus FP-A, FP-B FP-C and FP-D, and optionally FP-E and FP-F etc. comprise plant material from different plant species. More preferably, FP-A, FP-B, FP-C and/or FP-D etc. comprise vegetable purees, wherein the purees are obtained from different plants, preferably from different vegetables, e.g. FP-A comprises carrot puree, FP-B comprises cauliflower puree, FP-C comprises broccoli puree and FP-D comprises pumpkin puree, etc. In another example FP-A, FP-B, and optionally FP-C and FP-D consist of a base infant fomula (e.g. Nutrilon standard, Nutricia, Netherlands) to which 100 mg different plant materials is admixed per 200 ml ready to drink formula.

Preferably the present method comprises the administration of at least three different food products comprising different vegetable plant material (preferably vegetable purees), more preferably at least 4 different food products comprising different vegetable plant material , and most preferably 5 to 15 different food products comprising different vegetable plant material. In a further preferred embodiment, the present kit comprises at least 3 different food products comprising fruit plant material (preferably fruit purees), more preferably at least 4 different fruit plant materials , most preferably 5-15 different fruit plant materials. The sensoric imprinting of fruit tastes and vegetable tastes can take place on the same day,

FP-A preferably comprises a plant material from a vegetable selected from the group consisting of pea, corn, cabbage, courgette, carrot, spinach, endive, leek, red beet, butter bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom.

Preferably FP-B also comprises a vegetable plant material selected from this group, but other than the plant species used for the manufacture of FP-A. Preferably FP-C also comprises a vegetable plant material selected from this group, but other than the plant species used for the manufacture of FP-A and other than the plant species used for the manufacture of FP-B. Preferably FP-D comprises a vegetable plant material selected from the abovementioned group, but from a plant species other than the vegetable plant species used for the manufacture of FP-A, other than a plant species used for the manufacture of FP-B and other than a plant species used for the manufacture of FP-C.

Optionally further food products E, F, G, H, I and J and even further food products comprise a vegetable plant material selected from the abovementioned group, but from a plant species other than the vegetable plant species used for the manufacture of the other food products.

In a further preferred embodiment FP-A comprises a fruit selected from the group consisting of strawberry, banana, blueberry, apricot, pineapple, apple, orange, tangerine, mandarin, cherry, peach, grapefruit, melon, plum, pear, rose-hip, kiwi, red berry, grape, lemon, papaya, raspberry, avocado, cranberry, lychee, lime and nectarine.

Preferably FP-B also comprises a fruit selected from this group, wherein a fruit used for the manufacture of FP-B is different from a fruit used for the manufacture of FP-A. Preferably FP-C also comprises a fruit selected from this group, wherein a fruit used for the manufacture of FP-C is different from a fruit used for the manufacture of FP-A and FP-B. Preferably FP-D also comprises a fruit selected from this group, wherein a fruit used for the manufacture of FP-D is different from a fruit used for the manufacture of FP-A, FP-B and FP-C. Optionally further food products E, F, G, H, I and J and even further food products comprise a vegetable plant material selected from the abovementioned group, but from a plant species other than the vegetable plant species used for the manufacture of the other food products

The FP-A, FP-B, FP-C and/or FP-D etc. preferably have been subjected to a heat treatment. Heat treatment reduces microbial load, and reduce microbial contamination. The kit of parts preferably comprises a) sterilized plant purees suitable for storage at room temperature; b) pasteurized or sterilized puree suitable for storage at about 4°C; or c) pasteurized, frozen plant puree. The food products are preferably administered to the infant at a temperature between 15°C and 40°C.

### EXAMPLES

### Example 1: Vegetable purees

Kit of parts comprising 9 plastic containers with sealed lid with a capacity of 20 ml, wherein container 1 contains 15 ml carrot puree; container 2 contains 15 ml pea puree; container 3 contains 15 ml broccoli puree; container 4 contains 15 ml courgette puree; , container 5 contains 15 ml pumpkinpuree, container 6 contains 15 ml green bean puree, container 7 contains 15 ml cauliflower, container 8 contains 15 ml of a mixture of carrot puree and potato puree, container 9 contains 15 ml tomato puree.

The kit is accompanied with instruction to administer the contents of one container with every meal to an infant with the age between 4 months and 2 years. It is further optionally mentioned that exposure of the infant to different tastes during the early stages of life increases the liking of a broad range of vegetables and/or stimulates consumption of vegetables later in life. Stimulation of consumption of fruit and vegetables helps reducing the occurrence of diseases such as obesity and diabetes.

### Example 2: Infant formula with plant material

Kit of parts comprising 20 sachets; 5 sachets with 32 gram powdered Nutrilon Standaard 2 (Nutrician,, The Netherlands) and 100 mg carrot powder; 5 sachets with 32 gram powdered Nutrilon Standaard 2 (Nutricia, The Netherlands) and 100 mg broccoli powder; 5 sachets with 32 gram powdered Nutrilon Standaard 2 (Nutricia, The Netherlands) and 100 mg green bean powder; and 5 sachets with 32 gram powdered Nutrilon Standaard 2 (Nutricia, The Netherlands) and 100 mg tomato powder.

The kit is accompanied with instruction admix the powder with 180 ml warm water and administer the contents to the infant with the age between 6 months and 12 months, 3 times per day. It is further optionally mentioned that exposure of the infant to different tastes during the early stages of life increases the liking of a broad range of vegetables and/or stimulates consumption of vegetables later in life. Stimulation of consumption of fruit and vegetables helps reducing the occurrence of diseases such as obesity, cancer and diabetes.

### Example 3: Fruit purees (Reference Example)

Kit of parts comprising 6 plastic containers with sealed lid with a capacity of 30 ml, wherein containers 1 and 2 contain 25 ml banana puree; containers 3 and 4 contain 25 ml mango puree; containers 5 and 6 contain 25 ml apple puree.

The kit is accompanied with instruction to administer the contents of one container per day to an infant with the age between 4 months and 2 years. It is further mentioned that exposure of the infant to different tastes during the early stages of life stimulates consumption of fresh fruit later in life, thereby reducing the chances for the development of diseases such as obesity and diabetes.

## Claims

1. A non-therapeutic method for sensoric imprinting of different tastes in an infant, comprising the steps of:
a. administering to the infant one portion of a food product A (FP-A); followed by
b. administering to the infant one portion of a food product B (FP-B); followed by
c. administering to the infant one portion of a food product C (FP-C); followed by
d. administering to the infant one portion of a food product D (FP-D);
wherein FP-A comprises a plant material and FP-B comprises a plant material from a plant species other than a plant species used for the manufacture of FP-A and FP-C comprises a plant material from a plant species other than the plant species used for the manufacture of FP-A and other than a plant species used for the manufacture of FP-B and FP-D comprises a plant material from a plant species other than a plant species used for the manufacture of FP-A, other than a plant species used for the manufacture of FP-B and other than a plant species used for the manufacture of FP-C; and wherein FP-A, FP-B, FP-C and FP-D are infant nutrition or plant puree and wherein FP-A, FP-B, FP-C and FP-D comprise at least 50 wt.% plant material from a single plant species based on dry weight of the food product.

2. Use of a food product A (FP-A), a food product B (FP-B), a food product C (FP-C) and a food product D (FP-D), for the preparation of a kit of parts according to claim 7 for sensoric imprinting of different tastes in an infant,
wherein FP-A comprises a plant material and FP-B comprises a plant material from a plant species other than a plant species used for the manufacture of FP-A and FP-C comprises a plant material from a plant species other than the plant species used for the manufacture of FP-A and other than a plant species used for the manufacture of FP-B and FP-D comprises a plant material from a plant species other than a plant species used for the manufacture of FP-A, other than a plant species used for the manufacture of FP-B and other than a plant species used for the manufacture of FP-C; and wherein FP-A, FP-B, FP-C and FP-D are infant nutrition or plant puree and wherein FP-A, FP-B, FP-C and FP-D comprise at least 50 wt.% plant material from a single plant species based on dry weight of the food product.

3. The method according to claim 1 or the use according to claim 2, wherein the infant has an age below 2 years.

4. The method or use according any one of claim 1- 3, wherein FP-A, FP-B, FP-C and FP-D comprise vegetable puree.

5. The method or use according any one of claims 1-4, wherein FP-A, FP-B, FP-C and FP-D comprise between 5 and 60 en% lipid, between 5 and 40 en% protein and between 15 and 90 en% carbohydrate.

6. The method or use according to any one of claims 1-5, for stimulating the consumption of plant material such as vegetables and fruit later in life; for increasing familiarization with multiple plant tastes; and/or for reducing the occurrence of diseases later in life.

7. A kit of parts suitable for sensoric imprinting of different tastes in an infant, said kit comprising 4 to 100 containers comprising food product and at least one container with one portion food product A (FP-A) and one container with one portion food product B (FP -B) and one container with one portion food product C (FP-C) and one container with one portion food product D (FP-D), wherein:
a. FP-A and FP-B and FP-C and FP-D are (a1) in a form suitable for administration to an infant or (a2) in a form suitable for administration to an infant after admixing with an aqueous liquid;
b. FP-A comprises a plant material;
c. FP-B comprises a plant material from a plant species other than the plant species used for the manufacture of FP-A;
d. FP-C comprises a plant material from a plant species other than the plant species used for the manufacture of FP-A and other than a plant species used for the manufacture of FP-B
e. FP-D comprises a plant material from a plant species other than a plant species used for the manufacture of FP-A, other than a plant species used for the manufacture of FP-B and other than a plant species used for the manufacture of FP-C
f. FP-A, FP-B, FP-C and FP-D, comprise at least 50 wt.% plant material from a single plant species based on dry weight of the food product, and
g. one portion of food product is:
(i) 2 to 50 ml liquid or semiliquid food product;
(ii) 2 to 50 gram dry infant nutrition; and/or
(iii) 150 to 250 ml liquid infant nutrition.

8. The kit of parts according to claim 7, wherein FP-A, FP-B, FP-C and FP-D are a puree or gel, preferably a puree.

9. The kit of parts according to claim 7 or 8, wherein FP-A, FP-B, FP-C and FP-D comprise between 5 and 60 en% lipid, between 5 and 40 en% protein and between 15 and 90 en% carbohydrate.

10. The kit of parts according to any one of claims 7 - 9, wherein FP-A, FP-B, FP-C and FP-D comprise vegetable puree.

11. The kit of parts according to any one of claims 7-10, wherein FP-A, FP-B, FP-C and FP-D comprise fruit puree.

12. Kit of parts according to any one of claims 7-11 for stimulating an increased consumption of healthy plant material such as vegetables and fruit later in life.

13. Kit of parts according to of claim 12 for the prevention of obesity, diabetes, atherosclerosis, hypertension, cardiovascular diseases, high blood pressure and cancer.

## Patentansprüche

1. Nicht-therapeutisches Verfahren zum sensorischen Einprägen verschiedener Geschmacksrichtungen bei einem Kleinkind, umfassend die Schritte
a) Verabreichung einer Portion eines Nahrungsmittelproduktes A (FP-A), gefolgt von
b) Verabreichung einer Portion eines Nahrungsmittelproduktes B (FP-B), gefolgt von
c) Verabreichung einer Portion eines Nahrungsmittelproduktes C (FP-C, gefolgt von
d) Verabreichung einer Portion eines Nahrungsmittelproduktes D (FP-D),
worin FP-A ein pflanzliches Material und FP-B ein pflanzliches Material aus einer anderen als der zur Herstellung von FP-A verwendeten Pflanzenart umfasst und FP-C ein pflanzliches Material aus einer anderen als zur Herstellung von FP-A und zur Herstellung von FP-B verwendeten Pflanzenart umfasst und FP-D ein pflanzliches Material aus einer anderen als zur Herstellung von FP-A und zur Herstellung von FP-B und zur Herstellung von FP-C verwendeten Pflanzenart umfasst, und worin FP-A, FP-B, FP-C und FP-D Kleinkindernahrung oder pflanzliches Püree sind, und worin FP-A, FP-B, FP-C und FP-D basierend auf dem Trockengewicht des Nahrungsmittelproduktes mindestens 50 Gew.-% pflanzliches Material aus einer einzigen Pflanzenart umfassen.

2. Verwendung eines Nahrungsmittelproduktes A (FP-A), eines Nahrungsmittelproduktes B (FP-B), eines Nahrungsmittelproduktes C (FP-C) und eines Nahrungsmittelproduktes D (FP-D) zur Herstellung eines Kits aus Bestandteilen nach Anspruch 7 zum sensorischen Einprägen verschiedener Geschmacksrichtungen bei einem Kleinkind,
worin FP-A ein pflanzliches Material und FP-B ein pflanzliches Material aus einer anderen als zur Herstellung von FP-A verwendeten Pflanzenart umfasst, und FP-C ein pflanzliches Material aus einer anderen als zur Herstellung von FP-A und zur Herstellung von FP-B verwendeten Pflanzenart umfasst, und FP-C ein pflanzliches Material aus einer anderen als zur Herstellung von FP-A und zur Herstellung von FP-B und zur Herstellung von FP-C verwendeten Pflanzenart umfasst, und worin FP-A, FP-B, FP-C und FP-D Kleinkindernahrung oder pflanzliches Püree umfassen, und worin FP-A, FP-B, FP-C und FP-D basierend auf dem Trockengewicht des Nahrungsmittelproduktes mindestens 50 Gew.-% pflanzliches Material aus einer einzigen Pflanzenart umfassen.

3. Verfahren nach Anspruch 1 oder zur Verwendung nach Anspruch 2, worin das Kleinkind ein Alter von unter 2 Jahren hat.

4. Verfahren oder Verwendung nach einem der Ansprüche 1 bis 3, worin FP-A, FP-B, FP-C und FP-D Gemüsepüree umfassen.

5. Verfahren oder Verwendung nach einem der Ansprüche 1 bis 4, worin FP-A, FP-B, FP-C und FP-D zwischen 5 bis 60 % Energieanteil (en%) an Fett, zwischen 5 bis 40 % Energieanteil (en%) an Protein und zwischen 15 und 90 % Energieanteil (en%) an Kohlenhydraten umfassen.

6. Verfahren oder Verwendung nach einem der Ansprüche 1 bis 5 zum Stimulieren des Verzehrs an pflanzlichem Material wie Gemüse und Obst im späteren Leben, zur Erhöhung des Vertrautwerdens mit mannigfaltigen pflanzlichen Geschmacksrichtungen und/oder zur Reduktion des Auftretens von Erkrankungen im späteren Leben.

7. Ein geeignetes Kit aus Bestandteilen zum sensorischen Einprägen verschiedener Geschmacksrichtungen bei einem Kleinkind, wobei das Kit 4 bis 100 Behälter umfassend das Nahrungsmittelprodukt und mindestens einen Behälter mit einer Portion des Nahrungsmittelproduktes A (FP-A) und einen Behälter mit einer Portion des Nahrungsmittelproduktes B (FP-B) und einen Behälter mit einer Portion des Nahrungsmittelproduktes C (FP-C) und einen Behälter mit einer Portion des Nahrungsmittelproduktes D (FP-D), umfasst, worin
a) FP-A und FP-B und FP-C und FP-D in einer Form vorliegen, die zur Verabreichung an ein Kleinkind (a1) oder nach Beimischen einer wässrigen Lösung zur Verabreichung an ein Kleinkind (a2) geeignet ist,
b) FP-A ein pflanzliches Material umfasst,
c) FP-B ein pflanzliches Material aus einer anderen als zur Herstellung von FP-A verwendeten Pflanzenart umfasst,
d) FP-C ein pflanzliches Material aus einer anderen als zur Herstellung von FP-A und aus einer anderen als zur Herstellung von FP-B verwendeten Pflanzenart umfasst,
e) FP-D ein pflanzliches Material aus einer anderen als zur Herstellung von FP-A, aus einer anderen als zur Herstellung von FP-B und aus einer anderen als zur Herstellung von FP-C verwendeten Pflanzenart umfasst,
f) FP-A, FP-B, FP-C und FP-D mindestens 50 Gew.-% pflanzliches Material aus einer einzigen Pflanzenart bezogen auf das Trockengewicht des Nahrungsmittelproduktes umfasst und
g) eine Portion des Nahrungsmittelproduktes
(i) 2 bis 50 ml flüssiges oder halbflüssiges Nahrungsmittelprodukt,
(ii) 2 bis 50 g Kleinkinder-Trockennahrung und/oder
(iii) 150 bis 250 ml Kleinkinder-Flüssignahrung
ist.

8. Kit aus Bestandteilen nach Anspruch 7, worin FP-A, FP-B, FP-C und FP-D ein Püree oder ein Gel sind, vorzugsweise ein Püree.

9. Kit aus Bestandteilen nach Anspruch 7 oder 8, worin FP-A, FP-B, FP-C und FP-D zwischen 5 und 60 % Energieanteil (en%) an Fett, zwischen 5 und 40 % Energieanteil (en%) an Protein und zwischen 15 und 90 % Energieanteil (en%) an Kohlenhydraten umfassen.

10. Kit aus Bestandteilen nach einem der Ansprüche 7 bis 9, worin FP-A, FP-B, FP-C und FP-D Gemüsepüree umfassen.

11. Kit aus Bestandteilen nach einem der Ansprüche 7 bis 10, worin FP-A, FP-B, FP-C und FP-D Fruchtpüree umfassen.

12. Kit aus Bestandteilen nach einem der Ansprüche 7 bis 11 zum Stimulieren eines vermehrten Verzehrs von gesundem pflanzlichem Material wie Gemüse und Obst im späteren Leben.

13. Kit aus Bestandteilen nach Anspruch 12 zur Verhütung von Fettleibigkeit, Diabetes, Arteriosklerose, Hypertonie, kardiovaskulären Erkrankungen, hohem Blutdruck und Krebs.

## Revendications

1. Procédé non thérapeutique d'imprégnation sensorielle de différents goûts chez un nourrisson, qui comprend les étapes consistant à :
a. administrer au nourrisson une portion d'un produit alimentaire A (FP-A) ; puis
b. administrer au nourrisson une portion d'un produit alimentaire B (FP-B) ; puis
c. administrer au nourrisson une portion d'un produit alimentaire C (FP-C) ; puis
d. administrer au nourrisson une portion d'un produit alimentaire D (FP-D) ;
FP-A comprenant une matière végétale et FP-B comprenant une matière végétale d'une espèce végétale autre qu'une espèce végétale utilisée pour la fabrication de FP-A et FP-C comprenant une matière végétale d'une espèce végétale autre que l'espèce végétale utilisée pour la fabrication de FP-A et autre qu'une espèce végétale utilisée pour la fabrication de FP-B et FP-D comprenant une matière végétale d'une espèce végétale autre qu'une espèce végétale utilisée pour la fabrication de FP-A, autre qu'une espèce végétale utilisée pour la fabrication de FP-B et autre qu'une espèce végétale utilisée pour la fabrication de FP-C ; et FP-A, FP-B, FP-C et FP-D étant une formule pour nourrissons ou une purée végétale et FP-A, FP-B, FP-C et FP-D comprenant au moins 50 % en poids de matière végétale d'une seule espèce végétale par rapport au poids sec du produit alimentaire.

2. Utilisation d'un produit alimentaire A (FP-A), d'un produit alimentaire B (FP-B), d'un produit alimentaire C (FP-C) et d'un produit alimentaire D (FP-D), pour la préparation d'un kit de parties selon la revendication 7 pour l'imprégnation sensorielle de différents goûts chez un enfant,
FP-A comprenant une matière végétale et FP-B comprenant une matière végétale d'une espèce végétale autre qu'une espèce végétale utilisée pour la fabrication de FP-A et FP-C comprenant une matière végétale d'une espèce végétale autre que l'espèce végétale utilisée pour la fabrication de FP-A et autre qu'une espèce végétale utilisée pour la fabrication de FP-B et FP-D comprenant une matière végétale d'une espèce végétale autre qu'une espèce végétale utilisée pour la fabrication de FP-A, autre qu'une espèce végétale utilisée pour la fabrication de FP-B et autre qu'une espèce végétale utilisée pour la fabrication de FP-C ;
et FP-A, FP-B, FP-C et FP-D étant une formule pour nourrissons ou une purée végétale et
FP-A, FP-B, FP-C et FP-D comprenant au moins 50 % en poids de matière végétale d'une seule espèce végétale par rapport au poids sec du produit alimentaire.

3. Procédé selon la revendication 1, ou utilisation selon la revendication 2, dans lesquels le nourrisson est âgé de moins de 2 ans.

4. Procédé ou utilisation selon l'une quelconque des revendications 1 à 3, dans lesquels FP-A, FP-B, FP-C et FP-D comprennent de la purée végétale.

5. Procédé ou utilisation selon l'une quelconque des revendications 1 à 4, dans lesquels dans FP-A, FP-B, FP-C et FP-D le pourcentage énergétique des lipides est de 5 à 60, le pourcentage énergétique des protéines est de 5 à 40 et le pourcentage énergétique des glucides est de 15 à 90.

6. Procédé ou utilisation selon l'une quelconque des revendications 1 à 5, destinés à stimuler la consommation de matières végétales telles que des légumes et des fruits à un stade ultérieur de la vie ; destinés à davantage familiariser à de multiples goûts de produits végétaux ; et/ou destinés à réduire la survenue de maladies à un stade ultérieur de la vie.

7. Kit de parties adapté pour l'imprégnation sensorielle de différents goûts chez un nourrisson, ledit kit comprenant de 4 à 100 récipients comprenant un produit alimentaire et au moins un récipient avec une portion de produit alimentaire A (FP-A) et un récipient avec une portion de produit alimentaire B (FP-B) et un récipient avec une portion de produit alimentaire C (FP-C) et un récipient avec une portion de produit alimentaire D (FP-D), dans lequel :
a. FP-A et FP-B et FP-C et FP-D sont (a1) sous une forme adaptée pour l'administration à un nourrisson ou (a2) sous une forme adaptée pour l'administration à un nourrisson après avoir été mélangés avec un liquide aqueux ;
b. FP-A comprend une matière végétale ;
c. FP-B comprend une matière végétale d'une espèce végétale autre que l'espèce végétale utilisée pour la fabrication de FP-A ;
d. FP-C comprend une matière végétale d'une espèce végétale autre que l'espèce végétale utilisée pour la fabrication de FP-A et autre qu'une espèce végétale utilisée pour la fabrication de FP-B ;
e. FP-D comprend une matière végétale d'une espèce végétale autre qu'une espèce végétale utilisée pour la fabrication de FP-A, autre qu'une espèce végétale utilisée pour la fabrication de FP-B et autre qu'une espèce végétale utilisée pour la fabrication de FP-C ;
f. FP-A, FP-B, FP-C et FP-D, comprennent au moins 50 % en poids de matière végétale d'une seule espèce végétale par rapport au poids sec du produit alimentaire, et
g. une portion du produit alimentaire est :
(i) 2 à 50 mL de produit alimentaire liquide ou semi-liquide ;
(ii) 2 à 50 grammes de formule pour nourrissons anhydre ; et/ou
(iii) 150 à 250 mL de formule pour nourrissons liquide.

8. Kit de parties selon la revendication 7, dans lequel FP-A, FP-B, FP-C et FP-D sont une purée ou un gel, de préférence une purée.

9. Kit de parties selon la revendication 7 ou 8, dans lequel dans FP-A, FP-B, FP-C et FP-D le pourcentage énergétique des lipides est de 5 à 60, le pourcentage énergétique des protéines est de 5 à 40 et le pourcentage énergétique des glucides est de 15 à 90.

10. Kit de parties selon l'une quelconque des revendications 7 à 9, dans lequel FP-A, FP-B, FP-C et FP-D comprennent de la purée de légumes.

11. Kit de parties selon l'une quelconque des revendications 7 à 10, dans lequel FP-A, FP-B, FP-C et FP-D comprennent de la purée de fruits.

12. Kit de parties selon l'une quelconque des revendications 7 à 11, destiné à stimuler une augmentation de la consommation d'une matière végétale saine telle que des légumes et des fruits à un stade ultérieur de la vie.

13. Kit de parties selon la revendication 12, destiné à la prévention de l'obésité, du diabète, de l'athérosclérose, de l'hypertension, des maladies cardiovasculaires, de l'hypertension artérielle et du cancer.
